# EUROPÄISCHE PATENTANMELDUNG

(11) **EP 0 561 191 A1**
(43) Veröffentlichungstag der Anmeldung: **22.09.1993**
(21) Anmeldenummer: 93103018.3
(22) Anmeldetag: 26.02.1993
(51) Int. Cl.: B60D 1/46, B62D 49/06, A01B 59/042

(54) **Zugvorrichtung**

(30) Priorität: 16.03.1992 DE 4208342
(71) Anmelder: GKN Walterscheid GmbH, D-53784 Lohmar (DE)
(72) Erfinder: Coenen, Herbert, W-5202 Hennef (DE); Mikeska, Felix, W-5200 Siegburg (DE)
(74) Vertreter: Harwardt, Günther, Dipl.-Ing.

(57) **Zusammenfassung**

Die Erfindung betrifft eine Zugvorrichtung für an einen Traktor anzuhängende Geräte oder Anhänger mit ortsfest am Traktor angebrachten Befestigungsmitteln in Form von Lagerarmen sowie einem beweglichen Tragorgan 6, an welchem ein Zugorgan 5 beispielsweise in Form eines Zughakens befestigt ist. Zur Bewegung des Tragorganes 6 dienen zwei im Abstand zueinander gelenkig mit dem Tragorgan 6 einerseits und den Befestigungsmitteln 21 andererseits verbundenen Lenkern 8,9 oder Lenkerpaare 8a,9a;8,9, die jeweils ein Viergelenkgetriebe bilden. Das Tragorgan 6 ist von der Kuppelposition zur Transportposition über einen Kraftantrieb 11 bewegbar. Die Lenker 8,9, beziehungsweise Lenkerpaare 8,9;8a,9a sind in der Transportposition auf einer Wirkungslinie W angeordnet, die einer auf der Standebene E des Traktors 1 errichteten Senkrechten angenähert ist. Über Federmittel 13, die zwischen dem Traktorheck 4 und einem der Lenker 8 wirksam sind, erfährt das Tragorgan 6 eine Anfangsbewegung aus der Totpunktstellung und den Selbsthemmungsbereich heraus in eine Stellung, bei der ein Absenken unter Eigengewicht möglich ist. Durch diese Anordnung wird eine Bewegung des Zugorgangs 5 annähernd auf einem Viertelkreis ermöglicht. Die für die Verriegelung des Zugorgans 5 erforderlichen Mittel werden durch Auflasten, die das Zugorgan 5 von dem anzuhängenden Gerät aufnehmen muß und die vertikal wirken, praktisch nicht belastet. Diese gehen als Druckkräfte in die Lenker 8,9 ein.

## Beschreibung

Die Erfindung betrifft eine Zugvorrichtung für an einen Traktor anzuhängende Geräte oder Anhänger, mit ortsfest am Traktor angebrachten Befestigungsmitteln, mit einem beweglichen Tragorgan, an welchem ein Zugorgan befestigt ist, wobei das Tragorgan über zwei im Abstand zueinander gelenkig mit dem Tragorgan einerseits und mit den Befestigungsmitteln andererseits verbundene Lenker oder Lenkerpaare, die jeweils ein Viergelenkgetriebe bilden, von der Kuppelposition zur Transportposition durch einen Kraftantrieb bewegbar ist.

Eine solche Ausführungsform ist aus der EP 01 38 519 A2 bekannt. Bei der dort vorgesehenen Anordnung befinden sich die Gelenkstellen zwischen dem Tragorgan, an dem der Zughaken angebracht ist, und den Lenkern in der Transportposition gegenüber den Gelenkstellen zu dem Befestigungsmitteln am Traktorheck hin in einer zum Zugorgan hin versetzten Ebene. Hieraus folgt, daß die Verriegelungsmittel oder die Verbindungsmittel zum Kraftantrieb hin oder der Kraftantrieb selbst bei einem gekuppelten Gerät in erheblichem Maße Kräfte, die vom angehängten Gerät oder als vertikale Auflasten ausgeübt werden, aufnehmen müssen, um das Zugorgan zu halten.

Der Erfindung liegt die Aufgabe zugrunde, eine Zugvorrichtung zu schaffen, bei welcher der Kraftantrieb oder die Verriegelung für das sich in der Transportposition befindliche Zugorgan weitestgehend von Auflastkräften, die aus der reinen Anhängung resultieren, befreit sind.

Diese Aufgabe wird erfindungsgemäß dadurch gelöst, daß die Gelenkstellen mindestens eines der Lenker oder Lenkerpaare an den Befestigungsmitteln und am Tragorgan sich in der Transportposition auf einer Wirkungslinie befinden, die einer auf der Standebene des Traktors errichteten Senkrechten angenähert ist, und daß Federmittel vorhanden sind, welche ausgehend von der Transportposition eine Kraft über einen Anfangsweg zur Einleitung der Bewegung des Tragorganes in die Kuppelposition ausüben.

Von Vorteil bei dieser Ausbildung ist, daß die im wesentlichen vertikal gerichteten Auflastkräfte unmittelbar als Druckkräfte in die Lenker eingeleitet werden. Die Anordnung der Lenker gewährleistet, daß keine oder nur äußerst geringe Kräfte aufgrund der reinen Auflast zur Abstützung des anzuhängenden Gerätes als Verstellkräfte auf das Tragorgan und damit das Zuorgan in Richtung Kuppelposition umgesetzt werden. Hierdurch ist es möglich, die ohnehin erforderlichen Verriegelungsmittel so zu gestalten, das sie lediglich Zugkräfte zum Ziehen des angehängten Gerätes oder Anhängers aufnehmen müssen.

Durch die im wesentlichen vertikale Ausrichtung mindestens eines der Lenker oder Lenkerpaare ergibt sich eine Beharrungsposition aufgrund der Reibverhältnisse für das Tragorgan, welche zur Überführung in die Kuppelposition überwunden werden muß. Hierzu dienen die Federmittel. Diese bewegen das Viergelenkgetriebe beziehungsweise das Tragorgan über eine kurze Anfangsstrecke, so daß durch Betätigen des Kraftantriebes oder aufgrund des Eigengewichtes des Tragorgans eine eindeutige Bewegung in die Kuppelposition möglich ist.

Nach einer bevorzugten Ausgestaltung sind die Lenker als Parallelogrammlenkergetriebe gestaltet. Es ist jedoch auch möglich, geringfügige Winkelabweichungen vorzusehen, so daß die Lenker ein Trapezlenkergetriebe bilden.

Besonders günstige Kuppelverhältnisse, insbesondere eine verbesserte Einsicht für den Traktorfahrer auf das Zugorgan für den Kuppelvorgang ergibt sich dann, wenn die Lenker so ausgebildet sind, daß das Verhältnis der Bewegungsstrecke des Zugorgans beim Bewegen von der Transportposition in die Kuppelposition zur Aufstandsebene einerseits und von der Transportposition parallel zur Aufstandsebene andererseits sich dem Verhältnis 1:1 annähert. Daraus ergibt sich eine Bewegung in etwa über einen Viertelkreis.

Eine besonders günstige Einsatzmöglichkeit ergibt sich, wenn das Tragorgan über ein nur auf Zug belastbares Zugmittel mit dem Kraftantrieb verbunden ist. Die Anordnung der Federmittel macht einen besonders angeordneten Kraftantrieb, beispielsweise in Form einer separaten Kolbenzylindereinheit, überflüssig. Die Absenkbewegung wird selbsttätig eingeleitet. Der sowieso vorgesehene Kraftantrieb am Schlepperheck mit der Hubhydraulik und dem vorgesehenen Kraftarm begünstigt eine solche Anordnung, da das Zugmittel eine freie Relativbewegung und damit eine unabhängige Nutzung des Kraftarmes beispielsweise für die Bewegung der Unterlenker der Dreipunktanbauvorrichtung zuläßt, ohne daß ein Abkoppeln von der vorgesehenen Zug vorrichtung erfolgen muß. Die Zugvorrichtung kann also in der Transportposition verbleiben, wenn Hubbewegungen der Unterlenker über den Kraftarm durchgeführt werden.

Nach einer ersten Ausgestaltungsvariante ist vorgesehen, daß die Federmittel durch ein oder mehrere zwischen einer ortsfesten Abstützbasis des Traktors und zumindest einem der Lenker angeordnete Druckfedern dargestellt sind.

Eine weitere Gestaltungsmöglichkeit besteht darin, daß die Federmittel als Zugfeder dargestellt sind, welche auf einer Diagonalen des von den Lenkern gebildeten Vierlenkgetriebes angeordnet ist.

Als zweite Alternativlösung ist vorgeschlagen, daß einer der Lenker oder die Lenker eines der Lenkerpaare als Feder ausgebildet sind. Hierbei kann der Lenker als Biege- oder Druckfeder ausgebildet sein, welche bei der Überführung des Tragorgans in die Transportposition bei Annäherung an das Schlepperheck vorgespannt und damit verkürzt wird. Diese Vorspannung wird dann beim Lösen des Tragorgans vom Schlepperheck in eine das Tragorgan in Richtung auf die Kuppelposition über einen Anfangsweg bis zur Überwindung der Reibkräfte beziehungsweise der Selbsthemmung beschleunigende Bewegung umgesetzt. Die weitere Absenkung erfolgt dann, wenn ein Zugmittel vorgesehen ist, durch das Eigengewicht des Tragorganes und Absenken des Kraftarmes. Dieser sorgt in Verbindung mit dem Zugmittel dafür, daß das Tragorgan mit dem Zugorgan nicht unkontrolliert nach unten fällt.

Für eine weitere Ausführungsform ist vorgeschlagen, daß die Federmittel als zwischen den Lenkern oder Lenkerpaaren abgestützte Feder ausgebildet sind. Da sich die Lenker bei Bewegung in Richtung auf die Transportposition aufeinanderzu bewegen, kann die Feder vorgespannt werden. Diese Vorspannung wird genutzt, um die Bewegung des Tragorgans in Richtung auf die Kuppelposition auszulösen.

Eine bevorzugte Anwendung ist die für den Anbau am Schlepperheck. Es ist jedoch auch möglich, die Zugvorrichtung für die Frontanhängung zu nutzen.

Die Erfindung ist anhand der in der Zeichnung näher dargestellten Ausführungsvarianten im einzelnen erläutert.

Es zeigt
- Figur 1: eine Seitenansicht eines Traktors mit der am Heck angebauten Zugvorrichtung,
- Figur 2: eine Ansicht auf das Heck gemäß Figur 1,
- Figur 3: in schematisierter Form eine erste Ausführungsform der am Heck des Traktors angebrachten Zugvorrichtung mit einer zwischen Traktorheck und einem Lenker angeordneten Druckfeder,
- Figur 4: in schematisierter Form eine zweite Ausführungsform der am Heck des Traktors angeordneten Zugvorrichtung mit einem als Feder ausgestalteten Lenker,
- Figur 5: in schematisierter Form eine dritte Ausführungsform der am Heck des Traktors angeordneten Zugvorrichtung mit einer zwischen den Gelenkstellen zweier Lenker diagonal angeordneten Zugfeder und
- Figur 6: in schematisierter Form eine vierte Ausführungsform der am Heck des Traktors angeordneten Zugvorrichtung mit einer zwischen zwei Lenkern abgestützten Druckfeder.

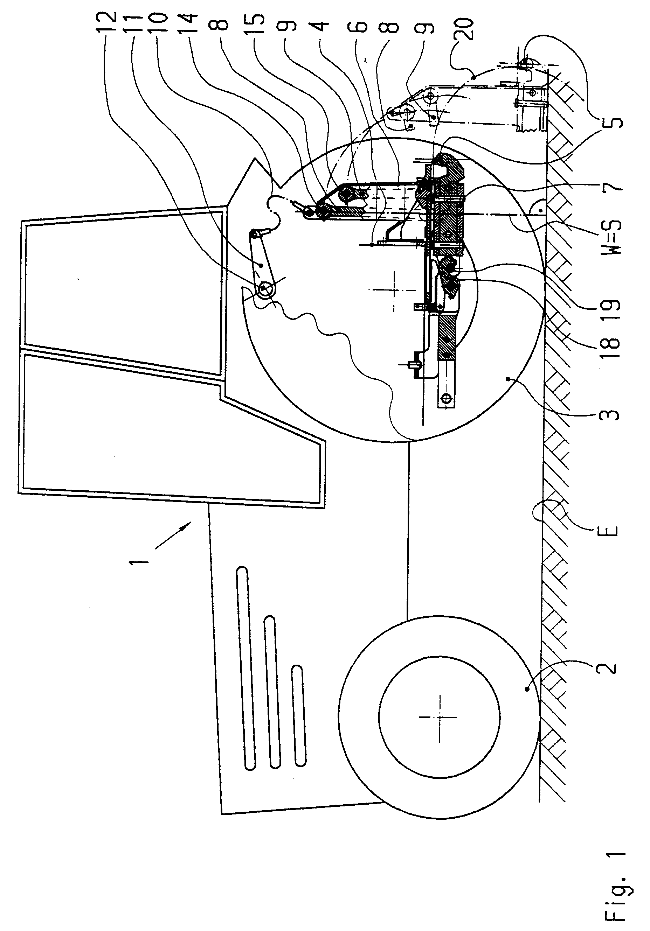

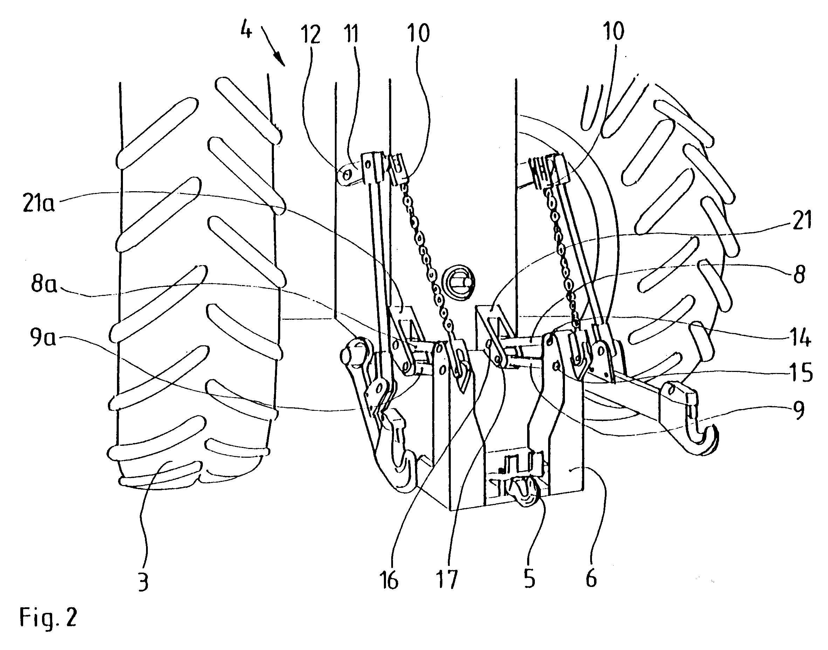

Aus den Figuren 1 und 2 ist der Traktor 1 mit den Vorderrädern 2 und den Hinterrädern 3 ersichtlich. Mit diesen Rädern 2,3 steht der Traktor 1 auf der Aufstandsebene E, die zur Vereinfachung der Erläuterung als ebene Fläche dargestellt ist, auf.

Am Heck 4 des Traktors 1 ist ein Zugorgan 5 befestigt, daß bewegbar ist, um das Kuppeln zu erleichtern. Hierzu ist das Zugorgan 5 mit dem Tragorgan 6 unter Zuhilfenahme eines Halterahmens 7 verbunden. Es ist zum einen in ausgezogenen Linien in der Transportposition am Traktorheck und zum anderen mit strichpunktierten Linien in der abgesenkten Kuppelposition dargestellt. Zur Führung des Tragorganes 6 dienen erste Lenker 8,8a, die parallel in einer Ebene liegend beidseits der Längsachse des Traktors 1 mit gleichem Abstand versetzt angeordnet sind. Hierzu sind zwei weitere Lenker 9,9a, die ein weiteres Paar bilden, in Richtung auf das Zugorgang 5 zu versetzt angeordnet. Die Verbindung zwischen den beiden Lenkern 8,8a sowie 9,9a, die die beiden Lenkerpaare bilden, mit dem Tragorgan 6 erfolgt über Gelenkstellen 14 und 15. Ferner sind die unteren Enden der Lenker 8,8a beziehungsweise 9,9a der beiden Lenkerpaare über Gelenkstellen 16,17 an am Heck 4 des Traktors 1 angebrachten Befestigungsmitteln in Form von Lagerarmen 21,21a angebracht. In der angehobenen Transportposition wird die Zugvorrichtung durch einen Verriegelungshaken 18, der einen Verriegelungsbolzen 19 des Tragorganes 6 umgreift, gehalten. Ferner ist aus den Figuren 1 und 2 erkennbar, daß das Tragorgan 6 über zwei als Hubketten 10 gestaltete Zugmittel mit den Kraftarmen 11 des Traktors 1 verbunden sind. Die Kraftarme 11 sind über einen nicht dargestellten Drehantrieb um die Schwenkachse 12 schwenkbar, wodurch eine Hubkraft erzeugt werden kann. Ferner ist aus Figur 1 die Bewegungskurve 20, die das Zugorgan 5 von der Transportposition, daß ist die in aus- gezogenen Linien dargestellte Position, in die abgesenkte Kuppelposition, daß ist die in strichpunktierten Linien dargestellte Position, durchführt, erkennbar. Außerdem sind noch Teile der Lenker 8,9 und die Bahnkurve der Ge- lenkstellen 14,15 dargestellt. Ferner ist erkennbar, daß der Lenker 8 im wesentlichen senkrecht zur Aufstandsebene E ausgerichtet ist. Hierdurch können vertikal auf das Zugorgan 5 einwirkende Tragkräfte, die aus der Auflast, die von einem anzuhängenden Gerät oder Anhänger ausgeübt werden, als Druckkräfte unmittelbar aufgenommen werden. Die Wirkungslinie W ist damit mit der Senkrechten S auf der Aufstandsebene E identisch.

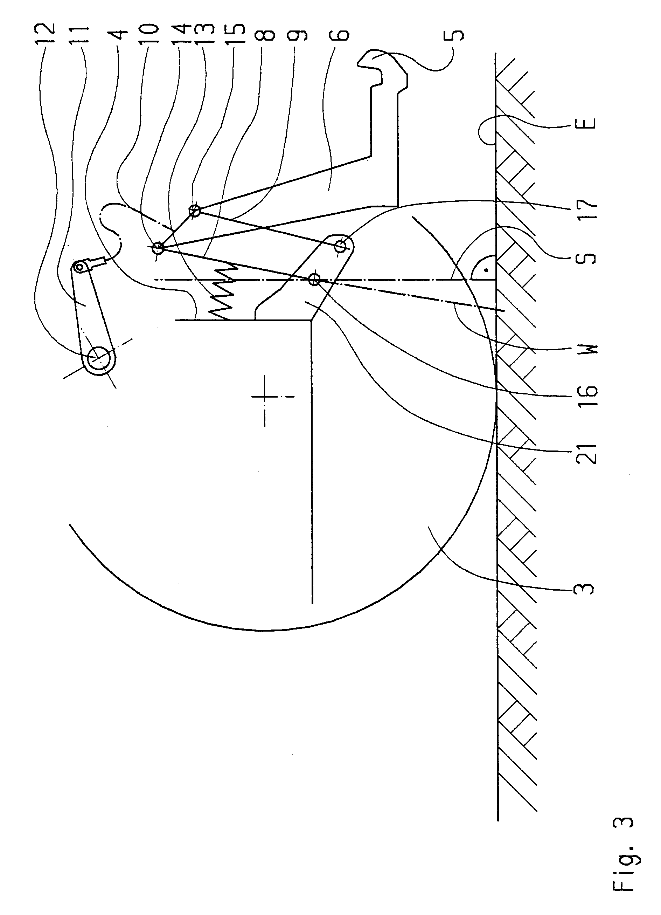

Aus den Figuren 3 bis 6 sind jeweils weitere Details und Alternativen bezüglich der Lenker 8 beziehungsweise 8a und 9 beziehungsweise 9a ersichtlich, um das Tragorgan 6 aus der in Figur 1 dargestellten Position in Richtung auf die Kuppelposition zu bewegen. Der Einfachheit halber sind jeweils in den Figuren 3-6 nur zwei Lenker 8,9 dargestellt. Es ist möglich, die in den Figuren 3-6 dargestellten Federmittel 13,13a,13b beziehungsweise 13c auch dem weiteren Viergelenkgetriebe mit den beiden Lenkern 8a und 9a, die in einer Ebene, parallel zur Zeichenebene, sich befinden, zuzuordnen.

Aus den Zeichnungsfiguren 3 bis 6 ergibt sich ebenfalls das Tragorgan 6 mit dem Zugorgan 5, die Lenker 8,9 mit den oberen Gelenkstellen 14,15, mit denen diese am Tragorgan 6 gelenkig angebracht sind, sowie den Lagerarmen 21, die am Heck 4 des Traktors 1 befestigt sind, mit den Gelenk stellen 16,17 für die beiden Lenker 8,9. Schematisch ist jeweils auch die Anordnung der Hubkette 10 erkennbar, die mit einem Ende am Tragorgan 6 und mit dem anderen Ende am Kraftarm 11 befestigt ist. Die einzelnen Ausführungsformen der Figuren 3 bis 6 unterscheiden sich lediglich durch die Zuordnung von Federmitteln, die im einzelnen nachfolgend beschrieben sind.

Beim Ausführungsbeispiel nach Figur 3 ist zwischen einer Abstützbasis, die durch das Heck 4 des Traktors 1 gebildet wird, und einer Abstützbasis, die durch den Lenker 8 gebildet wird, eine Druckfeder 13 angeordnet, welche beim Lösen der Verriegelung ein rechtsdrehendes Moment auf die Lenker 8,9 um die Gelenkstellen 16,17 über eine kurze Strecke ausübt, bis das Tragorgan 6 in eine Position überführt wird, bei der es aufgrund des Eigengewichtes in Richtung Kuppelposition selbsttätig bewegt wird. Aus Figur 3 ist erkennbar, daß die Wirkungslinie W, die im wesentlichen durch den Lenker 8 dargestellt wird, aus ihrer übereinstimmenden Position mit der Senkrechten S, wie sie zu Figur 1 erläutert ist, herausbewegt wurde. Die Druckfeder 13 kann entweder ortsfest an dem Schlepperheck 4 oder dem Lenker 8 zugeordnet werden. Eine gleiche Anordnung kann in Bezug auf das in der Zeichenebene hinter dem Viergelenkgetriebe mit den Lenkern 8,9 angeordnete Lenkerpaar 8a,9a getroffen sein.

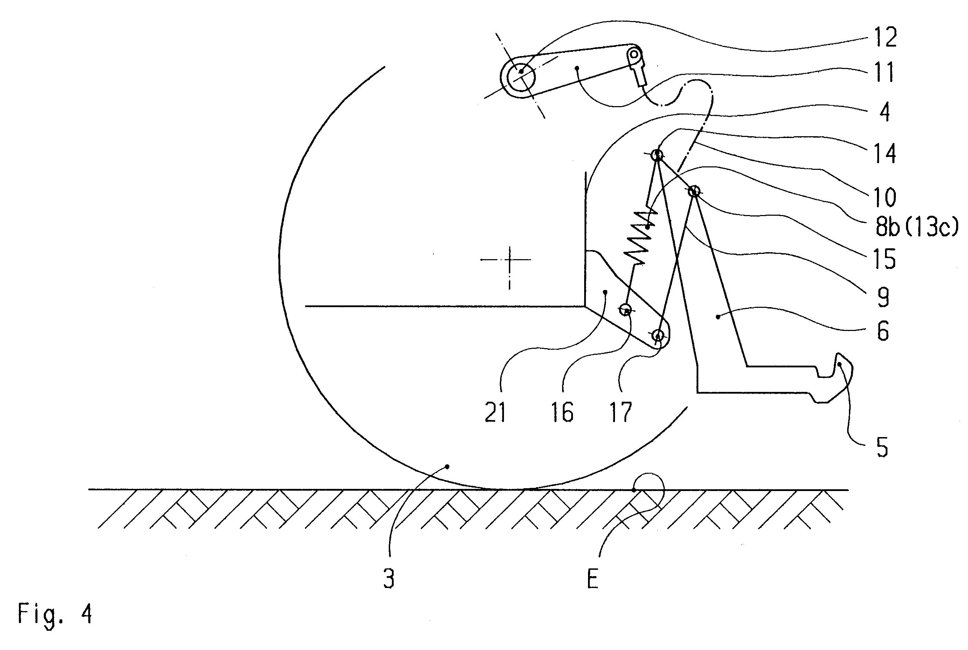

Bei der Ausführungsform gemäß Figur 4 ist einer der Lenker, und zwar 8b, als Federmittel ausgebildet, daß heißt, das Federmittel 13c ist integriert. Es handelt sich um eine Druckfeder. Alternativ kann auch ein Biegestab vorgesehen sein, der gegen einen Anschlag am Schlepperheck 4 beim Bewegen von der Kuppelposition in die Transportposition anläuft und verbogen wird. Beim Lösen der Verriege lung erfolgt dann eine Verlängerung des Lenkers unter Abstandsvergrößerung des Abstandes zwischen den beiden Gelenkstellen 14 und 16, so daß ein rechtsdrehendes Moment über eine kurze Strecke ausgeübt wird und damit das Tragorgan 6 in die gewünschte Position überführt wird, aus welcher dieses sich unmittelbar in die Kuppelpostion bewegen kann.

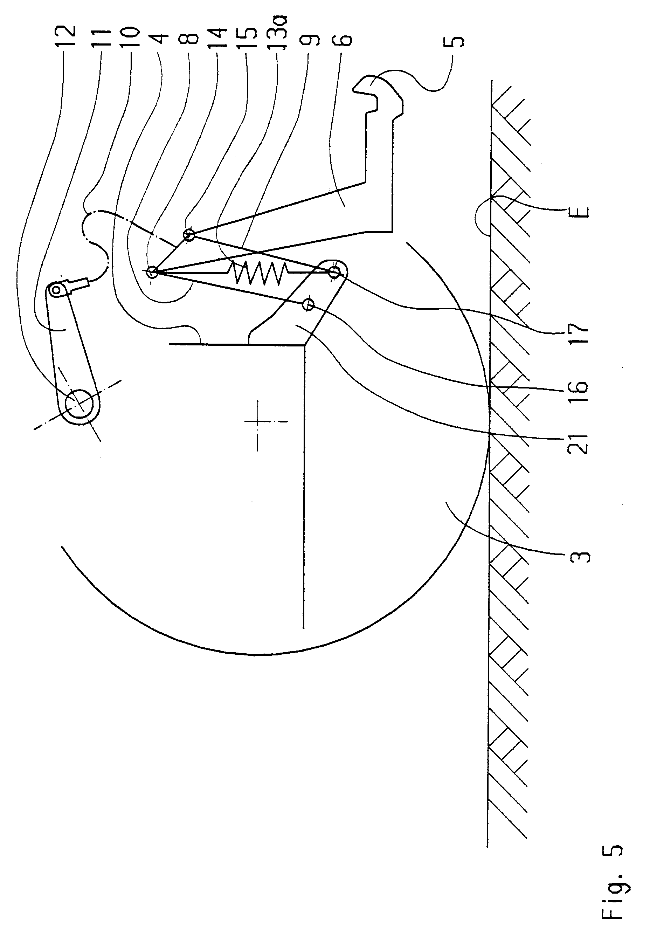

Bei der in Figur 5 dargestellten Ausführungsform ist ebenfalls ein Viergelenkgetriebe vorgesehen. Zwischen der Gelenkstelle 14 des ersten Lenkers 8 am Tragorgan 6 und der Gelenkstelle 17 des zweiten Lenkers 9 am Lagerarm 21 ist eine Zugfeder 13a als Federmittel angeordnet, welche beim Lösen der Entriegelung in der Transportposition bestrebt ist, den Abstand zwischen den beiden Gelenkstellen 14 und 17 zu verkürzen, wodurch ein rechtsdrehendes Moment auf die beiden Lenker 8,9 ausgeübt wird.

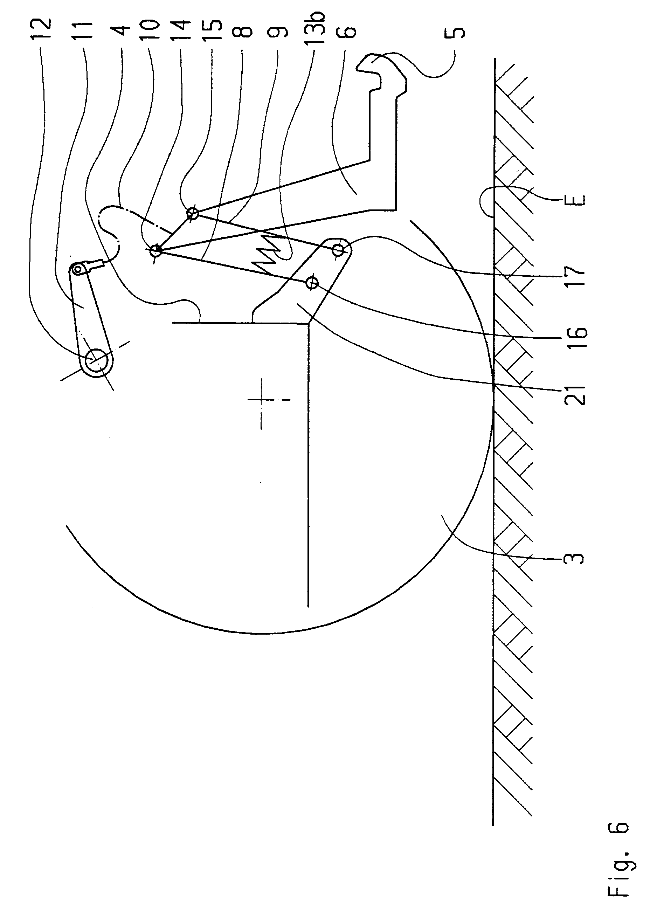

Bei der Ausführungsvariante nach Figur 6 ist zwischen den beiden Lenkern 8,9 eine Druckfeder 13b als Federmittel angeordnet. Hierbei wird die Tatsache genutzt, daß zwischen der Bewegung aus der Transportposition in Richtung auf die Kuppelpositon sich eine Abstandsänderung zwischen den beiden Lenkern 8,9 ergibt. Aus Figur 1 ist beispielsweise erkennbar, daß in der Transportposition die beiden Lenker 8,9 in einer angenäherten Stellung zueinander sind, während sich bei der in Figur 6 dargestellten Position der Abstand zwischen den beiden Lenkern 8,9 bereits vergrößert hat.

### Bezugszeichenliste

- 1: Traktor
- 2: Vorderräder
- 3: Hinterräder
- 4: Heck des Traktors
- 5: Zugorgan/Zughaken
- 6: Tragorgan
- 7: Halterahmen
- 8,8a,8b: erster Lenker
- 9,9a: zweiter Lenker
- 10: Hubkette/Zugmittel
- 11: Hubarm/Kraftantrieb
- 12: Schwenkachse des Hubarmes
- 13,13a,13b,13c: Federmittel
- 14,15,16,17: Gelenkstelle
- 18: Verriegelungshaken
- 19: Verriegelungsbolzen
- 20: Bewegungskurve
- 21,21a: Lagerarme/Befestigungsmittel
- E: Aufstandsebene
- W: Wirkungslinie
- S: Senkrechte

## Patentansprüche

1. Zugvorrichtung für an einen Traktor anzuhängende Geräte oder Anhänger, mit ortsfest am Traktor angebrachten Befestigungsmitteln, mit einem beweglichen Tragorgan, an welchem ein Zugorgan befestigt ist, wobei das Tragorgan über zwei im Abstand zueinander gelenkig mit dem Tragorgan einerseits und mit den Befestigungsmitteln andererseits verbundene Lenker oder Lenkerpaare, die jeweils ein Viergelenkgetriebe bilden, von der Kuppelposition zur Transportposition durch einen Kraftantrieb bewegbar ist,
dadurch gekennzeichnet,
daß die Gelenkstellen (14,16) mindestens eines der Lenker (8) oder Lenkerpaare (8,8a;9,9a) an den Befestigungsmitteln (21,21a) und am Tragorgan (6) sich in der Transportposition auf einer Wirkungslinie (W) befinden, die einer auf der Standebene (E) des Traktors (1) errichteten Senkrechten (S) angenähert ist, und daß Federmittel (13,13a-c) vorhanden sind, welche ausgehend von der Transportposition eine Kraft über einen Anfangsweg zur Einleitung der Bewegung des Tragorganes (6) in die Kuppelposition ausüben.

2. Zugvorrichtung nach Anspruch 1,
dadurch gekennzeichnet,
daß die Lenker (8,8a;9,9a) ein Parallelogrammlenkergetriebe bilden.

3. Zugvorrichtung nach Anspruch 1,
dadurch gekennzeichnet,
daß die Lenker (8,8a;9,9a) ein Trapezlenkergetriebe bilden.

4. Zugvorrichtung nach einem der Ansprüche 1 bis 3,
dadurch gekennzeichnet,
daß die Lenker (8,8a;9,9a) so ausgebildet sind, daß das Verhältnis der Bewegungsstrecke des Zugorgans (5) beim Bewegen von der Transportposition in die Kuppelposition zur Aufstandsebene (E) einerseits und von der Transportposition parallel zur Aufstandebene (E) andererseits dem Verhältnis 1:1 angenähert ist.

5. Zugvorrichtung nach Anspruch 1,
dadurch gekennzeichnet,
daß das Tragorgan (6) über ein nur auf Zug belastbares Zugmittel (10) mit dem Kraftantrieb (11) verbunden ist.

6. Zugvorrichtung nach einem der Ansrüche 1 bis 4,
dadurch gekennzeichnet,
daß die Federmittel (13) durch ein oder mehrere zwischen einer ortsfesten Abstützbasis (4) des Traktors (1) und zumindest einem der Lenker (8) angeordnete Druckfedern oder dergleichen Federelemente dargestellt sind (Figur 2).

7. Zugvorrichtung nach einem der Ansprüche 1 bis 4,
dadurch gekennzeichnet,
daß die Federmittel (13a) als Zugfeder dargestellt sind, welche auf einer Diagonalen des von den Lenkern (8,8a;9,9a) gebildeten Viergelenkgetriebes angeordnet ist (Figur 4).

8. Zugvorrichtung nach einem der Ansprüche 1 bis 4,
dadurch gekennzeichnet,
daß einer der Lenker (8) oder die Lenker (8,8a) eines der Lenkerpaare als Feder ausgebildet ist (Figur 3).

9. Zugvorrichtung nach einem dem Ansprüche 1 bis 4,
dadurch gekennzeichnet,
daß die Federmittel (13b) als zwischen den Lenkern (8,9) oder Lenkerpaaren abgestützte Feder ausgebildet sind (Figur 5).

10. Zugvorrichtung nach einem der Ansprüche 1 bis 9,
gekennzeichnet durch die Zuordnung zum Heck (4) des Traktors (1).
